(19) Europäisches Patentamt
European Patent Office
Office européen des brevets

(11) **EP 4 481 592 A1**

(12) **EUROPEAN PATENT APPLICATION**

(43) Date of publication:
**25.12.2024 Bulletin 2024/52**

(21) Application number: **23213310.8**

(22) Date of filing: **30.11.2023**

(51) International Patent Classification (IPC):
**G06F 18/25** (2023.01)    **G01S 17/86** (2020.01)
**G06V 10/80** (2022.01)    **G06V 20/56** (2022.01)
**G06V 20/64** (2022.01)

(52) Cooperative Patent Classification (CPC):
**G06V 10/806; G01S 17/86; G06F 18/253;**
**G06V 20/56; G06V 20/64;** G06V 2201/07;
Y02T 10/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.06.2023 CN 202310737884**

(71) Applicant: **Chongqing Changan Automobile Co.,**
**Ltd.**
**Chongqing 400023 (CN)**

(72) Inventors:
- **ZHANG, Xiuxiu**
  **Chongqing 400023 (CN)**
- **QI, Shengxiang**
  **Chongqing 400023 (CN)**
- **DONG, Nan**
  **Chongqing 400023 (CN)**

(74) Representative: **M. Zardi & Co S.A.**
**Via G. B. Pioda, 6**
**6900 Lugano (CH)**

(54) **METHOD AND APPARATUS FOR FUSING IMAGE WITH POINT CLOUD**

(57) Provided are a method and apparatus for fusing an image with a point cloud. The method includes: inputting an image gridding feature and a point cloud gridding feature to a first-stage processing module of a network transformer to obtain a fused point cloud feature; inputting the image gridding feature and the fused point cloud feature to a second-stage processing module of the network transformer to obtain a fused image feature, where the first-stage processing module and the second-stage processing module have the same structures; iterating the fused image feature and the fused point cloud feature by using the first-stage processing module and the second-stage processing module to obtain a fused feature; and inputting the fused feature to a pre-constructed target detection network to achieve target detection. Thus, the problem of low accuracy of image and point cloud fusion in the existing technology.

FIG. 2

FIG. 2-1

EP 4 481 592 A1

FIG. 2-2

**Description**

**Field of the Invention**

The present disclosure relates to the technical field of automatic driving, and in particular, to a method and apparatus for fusing an image with a point cloud.

**Background of the Invention**

It is very crucial to detect a three-dimensional object in the field of automatic driving. In a traditional vehicle-mounted sensing system, a radar and a camera are often key sensors that provide accurate point cloud data and image information of a surrounding world. In order to reliably detect an object, an automatic driving automobile is simultaneously provided with the radar and the camera to provide point cloud data and RGB images, thus achieving a better sensing effect.
In the related technology, the camera is usually used to acquire images, and the radar is used to acquire the point cloud data. The images of the camera and a point cloud of a laser radar are respectively detected, and a pixel-level fusion method is performed on detection results to detect a target. However, the method cannot effectively and accurately detect the target.

**Summary of the Invention**

A first objective of the present disclosure is to provide a method for fusing an image with a point cloud, so as to solve the problem in the existing technology of low accuracy of target detection. A second objective is to provide an apparatus for fusing an image with a point cloud.
In order to achieve the above objectives, the present disclosure adopts the following technical solutions:
A method for fusing an image with a point cloud includes: inputting an image gridding feature and a point cloud gridding feature to a first-stage processing module of a network transformer to obtain a fused point cloud feature; inputting the image gridding feature and the fused point cloud feature to a second-stage processing module of the network transformer to obtain a fused image feature, where the first-stage processing module and the second-stage processing module have the same structures; iterating the fused image feature and the fused point cloud feature by using the first-stage processing module and the second-stage processing module to obtain a fused feature; and inputting the fused feature to a pre-constructed target detection network to achieve target detection.
According to the above technical means, the present disclosure innovatively proposes that the network transformer is used to fuse features of two different modalities: point cloud data and images. Through multiple iterations, information of the two modalities is fused to better fuse the images with the point cloud data at different scales, thereby improving the accuracy of target detection. Meanwhile, the present disclosure does not rely highly on the input quality of a laser radar and has better robustness.
Further, the inputting an image gridding feature and a point cloud gridding feature to a first-stage processing module of a network transformer to obtain a fused point cloud feature includes: using the image gridding feature as an input of a self-attention mechanism layer, and obtaining a first query graph through the self-attention mechanism layer and a residual connection; using the point cloud gridding feature as a first key-value map and a first value map of the self-attention mechanism layer, and processing the first key-value map, the first value map, and the first query graph through the self-attention mechanism layer and the residual connection to obtain a second query graph; and processing the second query graph, the first key-value map, and the first value map through the self-attention mechanism layer, the residual connection, and a feedforward network to obtain the fused point cloud feature.
According to the above technical means, the accuracy of target detection is improved through the multiple iterations.
Further, the inputting the image gridding feature and the point cloud feature to a second-stage processing module of the network transformer to obtain a fused image feature includes: using the point cloud gridding feature as an input of a self-attention mechanism layer, and obtaining a third query graph through the self-attention mechanism layer and a residual connection; using the image gridding feature as a second key-value map and a second value map of the self-attention mechanism layer, and processing the second key-value map, the second value map, and the third query graph through the self-attention mechanism layer and the residual connection to obtain a fourth query graph; and processing the fourth query graph, the second key-value map, and the second value map through the self-attention mechanism layer, the residual connection, and a feedforward network to obtain the fused image feature.
According to the above technical means, the accuracy of target detection is improved through the multiple iterations.
Further, before the inputting an image gridding feature and a point cloud gridding feature to a first-stage processing module of a network transformer to obtain a fused point cloud feature, the method further includes: acquiring images of cameras at various viewing angles; performing feature encoding on the images by using a first convolutional network to obtain an image encoded feature; transforming the image encoded feature into an image three-dimensional voxel feature; and transforming the image three-dimensional voxel feature into the image gridding feature through coordinate transformation.

According to the above technical means, the convolutional network is used to process the images, which can effectively ensure the sensing performance of the entire network transformer.

Further, before the inputting an image gridding feature and a point cloud gridding feature to a first-stage processing module of a network transformer to obtain a fused point cloud feature, the method further includes: acquiring point cloud data of a vehicle-mounted laser radar; performing feature encoding on the point cloud data by using a second convolutional neural network to obtain a point cloud encoded feature; and transforming the point cloud encoded feature into the point cloud gridding feature.

According to the above technical means, the convolutional network is used to process the images, which can effectively ensure the sensing performance of the entire network transformer.

Further, the method further includes: pre-constructing the network transformer; the pre-constructing the network transformer includes: acquiring a training sample library, where the training sample library includes image data, point cloud data, and road information; processing the image data, the point cloud data, and the road information through a multi-task loss function to obtain an optimal network weight of training samples; and training the network transformer according to the optimal network weight to obtain the pre-constructed network transformer, where the multi-task loss function is formed by weighting a target detection loss and a road structure segmentation loss.

According to the above technical means, the network transformer is used to fuse features of two different modalities: point cloud data and images. Through multiple iterations, information of the two modalities is fused to better fuse the images with the point cloud data at different scales, thereby improving the accuracy of target detection.

An apparatus for fusing an image with a point cloud includes: a first processing module, configured to input an image gridding feature and a point cloud gridding feature to a first-stage processing module of a network transformer to obtain a fused point cloud feature; a second processing module, configured to input the image gridding feature and the fused point cloud feature to a second-stage processing module of the network transformer to obtain a fused image feature, where the first-stage processing module and the second-stage processing module have the same structures; an iteration module, configured to iterate the fused image feature and the fused point cloud feature by using the first-stage processing module and the second-stage processing module to obtain a fused feature; and a target detection module, configured to input the fused feature to a pre-constructed target detection network to achieve target detection.

Further, the first processing module includes: a first query graph unit, configured to: use the image gridding feature as an input of the first-stage processing module, and obtain a first query graph through a self-attention mechanism layer and a residual connection; a second query graph unit, configured to: use the point cloud gridding feature as a first key-value map and a first value map, and process the first key-value map, the first value map, and the first query graph through the self-attention mechanism layer and the residual connection to obtain a second query graph; and a first fusion unit, configured to process the second query graph, the first key-value map, and the first value map through the self-attention mechanism layer, the residual connection, and a feedforward network to obtain the fused point cloud feature.

Further, the second processing module includes: a third query graph unit, configured to: use the point cloud gridding feature as an input of the second-stage processing module, and obtain a third query graph through a self-attention mechanism layer and a residual connection; a fourth query graph unit, configured to: use the image gridding feature as a second key-value map and a second value map, and process the second key-value map, the second value map, and the third query graph through the self-attention mechanism layer and the residual connection to obtain a fourth query graph; and a second fusion unit, configured to process the fourth query graph, the second key-value map, and the second value map through the self-attention mechanism layer, the residual connection, and a feedforward network to obtain the fused image feature.

Further, the apparatus further includes: an image module, configured to acquire images of cameras at various viewing angles; an image encoding module, configured to perform feature encoding on the images by using a first convolutional network to obtain an image encoded feature; a transformation module, configured to transform the image encoded feature into an image three-dimensional voxel feature; and an image gridding module, configured to transform the image three-dimensional voxel feature into the image gridding feature through coordinate transformation.

Further, the apparatus further includes: a point cloud module, configured to acquire point cloud data of a vehicle-mounted laser radar; a point cloud encoding module, configured to perform feature encoding on the point cloud data by using a second convolutional neural network to obtain a point cloud encoded feature; and a point cloud gridding module, configured to transform the point cloud encoded feature into the point cloud gridding feature.

Further, the apparatus further includes a construction module, configured to pre-construct the network transformer; the construction module includes: a sample library unit, configured to acquire a training sample library, where the training sample library includes image data, point cloud data, and road information; and a construction unit, configured to: process the image data, the point cloud data, and the road information through a multi-task loss function to obtain an optimal network weight of training samples, and train the network transformer according to the optimal network weight to obtain the pre-constructed network transformer, where the multi-task loss function is formed by weighting a target detection loss and a road structure segmentation loss. Beneficial effects of the present disclosure are as follows:

The present disclosure innovatively proposes that the network transformer is used to fuse features of two different modalities: point cloud data and images. Through multiple iterations, information of the two modalities is fused to better fuse the images with the point cloud data at different scales, thereby improving the accuracy of target detection. Meanwhile, the present disclosure does not rely highly on the input quality of a laser radar and has better robustness.

**Brief Description of the Drawings**

FIG. 1 is a schematic diagram of a network architecture of fusing an image with a point cloud according to the present disclosure;

FIG. 2 is a structural diagram of a network transformer according to the present disclosure;

FIG. 2-1 is a diagram of an internal structure of a first-stage processing module of a network transformer according to the present disclosure;

FIG. 2-2 is a diagram of an internal structure of a second-stage processing module of a network transformer according to the present disclosure;

FIG. 3 is a flowchart of a method for fusing an image with a point cloud according to the present disclosure;

FIG. 4 is a flowchart of a method for fusing an image with a point cloud according to the present disclosure; and

FIG. 5 is a schematic structural diagram of an apparatus for fusing an image with a point cloud according to the present disclosure.

**Detailed Description of the Embodiments**

The following will explain the implementations of the present disclosure with reference to the accompanying drawings and preferred embodiments. Those skilled in the art can easily understand other advantages and effects of the present disclosure from the content disclosed in this specification. The present disclosure can also be implemented or applied through other different specific implementations, and the details in this specification can be modified or changed in various ways based on different perspectives and applications without departing from the spirit of the present disclosure. It should be understood that the preferred embodiments are only intended to illustrate the present disclosure and not intended to limit the protection scope of the present disclosure.

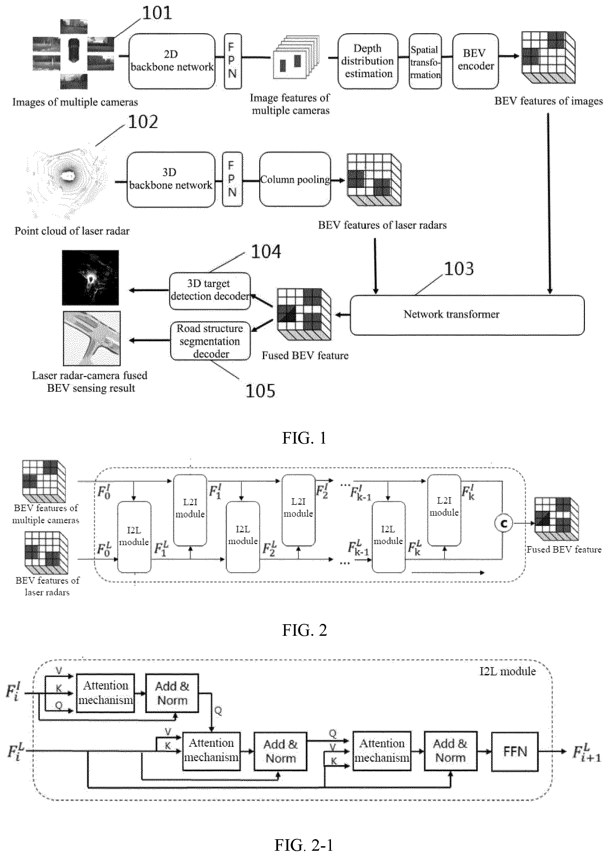

Referring to FIG. 1, it shows a schematic diagram of a network architecture of fusing an image with a point cloud according to the present disclosure, specifically including:

an image sensor 101, a radar sensor 102, a network transformer 103, a 3D target detection decoder 104, and a road structure segmentation decoder 105.

In an automatic driving scene, the image sensor can be a camera; and the radar sensor can be any radar device used in automatic driving and for meeting a requirement for sensing accuracy, which can provide point cloud data, such as a laser radar sensor, a mechanical laser radar, a semi-solid laser radar, or a solid-state laser radar.

In specific applications, an autonomous vehicle is driven on a road. Images of a scene around the vehicle are acquired through the image sensors arranged at various viewing angles on the autonomous vehicle. Corresponding point cloud data is acquired by using the radar sensor, thus obtaining a point cloud and the images used for describing the scene around the vehicle. The network transformer can be understood as a deep learning model based on a self-attention mechanism, so that the network transformer is applicable to parallelized computation. Due to its own model complexity, the network transformer has higher accuracy and performance than other previously popular methods. Therefore, the inventor of the present disclosure specifically carries out a test on a nuScenes dataset validation set using different methods. Test results of the test are shown in Table 1.

The nuScenes dataset validation set includes different locations, weather conditions, vehicle types, vegetations, road signs, driving rules, and the like.

Table 1:

|  | Method | Backbone network of camera | Backbone network of laser radar | Accuracy mAP of target detection | Accuracy NDS of comprehensive indicator |
|---|---|---|---|---|---|
| | FUTR3D | R101 | VoxelNet | 64.5 | 68.3 |
| | MVP | DLA34 | VoxelNet | 67.1 | 70.8 |
| | AutoAlignV2 | CSPNet | VoxelNet | 67.1 | 71.2 |
| | TransFusion | R50 | VoxelNet | 67.5 | 71.3 |
| | Network transformer | R50 | VoxelNet | 69.9 | 72.6 |

After the above test, the network transformer has higher accuracy of target detection and higher accuracy in comprehensive indicators than other methods.

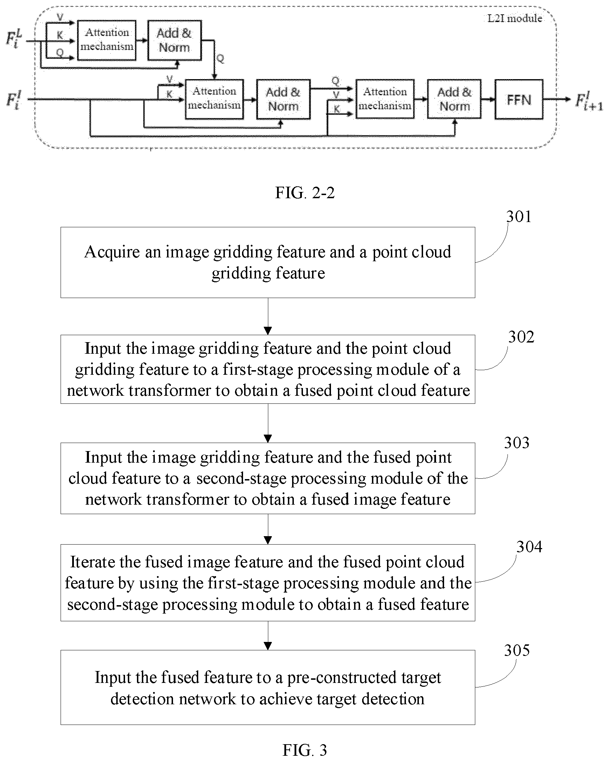

An internal structure of the network transformer is as shown in FIG. 2. The network transformer includes a first-stage processing module (I2L module) and a second-stage processing module (L2I module). An image gridding feature $F_0^I$ and a point cloud gridding feature $F_0^L$ are input to the I2L module to obtain a fused point cloud feature $F_1^L$. $F_1^L$ and $F_0^I$ are input to the L2I module to obtain a fused image feature $F_1^I$. $F_1^I$ and $F_1^L$ are input to the I2L module to obtain $F_2^L$, and $F_2^L$ and $F_1^I$ are input to the L2I module to obtain $F_2^I$. The above operations are cyclically repeated for multiple iterations, thus finally obtaining a fused feature.

An internal structure of the first-stage processing module is as shown in FIG. 2-1, and an internal structure of the second-stage processing module is as shown in FIG. 2-2. In the network transformer, the I2L module is first performed: An image bird's eye view (BEV) feature and a laser radar BEV feature are used to obtain the fused point cloud feature through the above steps; the L2I module is then performed: The fused point cloud feature and the image BEV feature are used to obtain the fused image feature through the above steps. Then, the first-stage processing module and the second-stage processing module are used to iterate the fused image feature and the fused point cloud feature to obtain the fused feature. One I2L module and one L2I module here form one iteration. A relationship between the number of iterations and the accuracy is as shown in Table 2. According to Table 2, a larger number of iterations indicate higher accuracy of the network transformer.

Table 2:

| Number of iterations | Accuracy mAP of target detection | Accuracy NDS of comprehensive indicator |
|---|---|---|
| 0 (laser radar only) | 65.1 | 70.1 |
| 1 | 69.5 | 72.3 |
| 2 | 69.7 | 72.5 |
| 3 | 69.8 | 72.5 |
| 4 | 69.9 | 72.6 |

The images acquired by the image sensors at the various viewing angles are respectively processed by a 2D backbone convolutional network and a Feature Pyramid Network (FPN) to obtain image features at the various viewing angles. Image gridding features (the image BEV features) at the various viewing angles are generated from the image features through depth distribution estimation, spatial transformation, and a BEV encoder.

The point cloud features of the various radar sensors are obtained from the point cloud data acquired by the various radar sensor through a 3D backbone convolutional network, and point cloud gridding features (the point cloud BEV features) of the various radar sensors are generated via column pooling.

The image gridding features and the point cloud gridding features are input to the network transformer to obtain the fused features, and the fused features are respectively sent to different target detection networks to achieve target detection.

Each target detection network includes a 3D target detection decoder or a road structure segmentation decoder. The fused features are input to different target detection networks to detect different targets.

Based on the above architecture, a processing process of a method for fusing an image with a point cloud according to the present disclosure will be explained in detail. Referring to FIG. 3, it is a flowchart of a method for fusing an image with a point cloud according to an embodiment of the present disclosure. The method includes:
In step 301: An image gridding feature and a point cloud gridding feature are acquired.

Before step 301 is executed, it is necessary to acquire images of cameras at various viewing angles and point cloud data of radar sensors. The point cloud data provides necessary locations and geometric information at a low resolution, and the images provide rich colors, textures, and semantic information at a high resolution. This fully utilizes complementary advantages between a point cloud and the images to achieve fusion of the images and the point cloud data.

In one implementation method, in step 301, an image gridding feature is acquired, which specifically includes the following sub-steps:

In sub-step 3011: images of cameras at various viewing angles are acquired.

In sub-step 3012: feature encoding is performed on the images by using a first convolutional network to obtain an image encoded feature.

In sub-step 3013: the image encoded feature is transformed into an image three-dimensional voxel feature.

In sub-step 3014: the image three-dimensional voxel feature is transformed into the image gridding feature through coordinate transformation.

The first convolutional network is a 2D convolutional backbone network. The 2D convolutional backbone network *Encode²ᴰ* is used to perform the feature encoding on 2D visual images $M_i$ (*i* = 1,2, ..., *N*) acquired by the cameras at the various viewing angles to obtain the image encoded feature $F_i^M \in \mathbf{R}^{C_M^1 \times H \times W}$ ($i =$ 1,2, ..., *N*) of the cameras at the various viewing angles. Then, a confidence estimate $\alpha_i^M \in \mathbf{R}^{D \times H \times W} (i = 1,2, ..., N)$ of each image pixel point corresponding to the image encoded feature within a certain depth dispersion interval is obtained through depth estimation; a feature of each pixel is subjected to weighted average into a dispersion grid point corresponding to each depth, finally obtaining the three-dimensional voxel feature $F_i'^M \in \mathbf{R}^{C_M^1 \times D \times H \times W} (i = 1,2, ..., N)$ corresponding to the images of the cameras at the various viewing angles; planarization mapping is performed on the image encoded feature in the three-dimensional voxel feature by using column pooling to obtain a BEV planar image encoded feature $F_{BEV}^I \in \mathbf{R}^{C_I^2 \times Z \times X}$; in conjunction with an internal reference $I_i$ (*i* = 1,2, ..., *N*) of the cameras at the various viewing angles and an external reference $R_i^M, R_i^M (i = 1,2, ..., N)$ of a relative body coordinate system, the three-dimensional voxel features corresponding to the images of the cameras at the various viewing angles are transformed through coordinate system transformation to a uniform BEV viewing angle 3D image gridding feature space $\mathbf{R}^{C_I^1 \times Z \times X \times Y}$ taking an origin of a coordinate system of a current vehicle.

The internal reference generally refers to a center point and focal length in an X or Y direction of the camera, and the external reference generally refers to a rotation matrix or a translation matrix.

Further, the 2D convolutional backbone network *Encode²ᴰ* assigns the same weights to the input 2D visual images $M_i$ (*i* = 1,2, ..., *N*) of the cameras at the various viewing angles. That is, the weights of the 2D visual images of the cameras at the various viewing angles are the same. In practical applications, the 2D convolutional backbone network can adopt any one of the following: ResNet, EfficientNet, SwinTransformer, VoVNetV2, and ConvNeXt, and is then fused with a CBNet to combine backbone network architecture and the FPN at multiple scales.

Specifically, a method for estimating a depth of the image encoded feature is mainly to estimate a feature map $F_i^M \in \mathbf{R}^{C_M^1 \times H \times W} (i = 1,2, ..., N)$ of the 2D visual images of the cameras at the various viewing angles through a depth estimation network. A prediction result can be used to estimate a confidence $\alpha_i^M \in \mathbf{R}^{D \times H \times W}$ of discrete points of each image pixel point separately in an interval of [0,1]; $\alpha_i^M$ corresponding to a truth-value depth is 1, and $\alpha_i^M$ corresponding to another non-truth-value depth grid point is 0; or, a Gaussian distribution parameter estimate with a predicted mean value of $\mu_i^M \in \mathbf{R}^{H \times W}$ and a standard difference of $\sigma_i^M \in \mathbf{R}^{H \times W}$ can also be designated; and the corresponding truth-value depth supervises the mean value .

Further, for an input of a convolutional layer of the image depth estimate of the camera at each viewing angle, the feature maps of the images at other viewing angles can be transformed to a plane of current viewing angle through homography transformation in combination with the internal reference $I_i (i = 1, 2, ..., N)$ of the cameras at the various viewing angles and the external reference $R_i^M, R_i^M (i = 1, 2, ..., N)$ of the relative body coordinate system, to perform feature superposition. The feature map of the image at the viewing angle at another time stamp $t \in \{t_0 - (k - 1)T, ..., t_0 - 2T, t_0 - T, t_0\}$ is transformed to the plane of the current viewing angle through the homography transformation, to perform feature superposition. Finally, a feature $F'^M_i \in \mathbf{R}^{k \times N \times C_M^1 \times H \times W} (i = 1, 2, ..., N)$ of the cameras of the multiple viewing angles is obtained. Dimension reduction is performed on the feature of each pixel by a convolutional network with a convolution kernel of $1 \times 1$ to obtain $F''^M_i \in \mathbf{R}^{C_M^1 \times H \times W} (i = 1, 2, ..., N)$ which is input to the depth estimation network. Thus, a predicted depth is more accurate by combining multi-view and multi-frame information.

In practical applications, the prediction accuracy of the depth estimation network can be improved by multiple iterations. In each iteration, a mean value and a standard deviation can be calculated according to a depth distribution of the previous prediction. If the standard deviation is less than a given threshold, it indicates that the depth prediction is concentrated. In this case, the mean value is used as a center to narrow a depth dispersion interval of next depth prediction and reduce a step length, to perform finer depth prediction. If the standard deviation is greater than the given threshold, it indicates that the depth prediction is dispersive, and a depth true value may be beyond the interval. In this case, the mean value is used as a center to narrow a depth dispersion interval of next depth prediction and reduce a step length.

In another implementation, in step 301, a point cloud gridding feature is acquired, which specifically includes the following sub-steps:

In sub-step 3015: point cloud data of a vehicle-mounted laser radar is acquired.

The point cloud data refers to a point data set of a target object.

In sub-step 3016: feature encoding is performed on the point cloud data by using a second convolutional neural network to obtain a point cloud encoded feature.

In sub-step 3017: the point cloud encoded feature is transformed into the point cloud gridding feature.

The second convolutional neural network adopts a 3D sparse convolutional backbone network Encode[3D]. The 3D sparse convolutional backbone network Encode[3D] is used to respectively perform point cloud feature encoding on the point cloud data $L_j (j = 1, 2, ..., M)$ acquired by the various laser radars to obtain 3D point cloud encoded features $F_j^L \in R^{C_L^1} (j = 1, 2, ..., M)$ of the various laser radars. The 3D sparse convolutional backbone network Encode[3D] allocates the same weights to the input point clouds $L_j (j = 1, 2, ..., M)$ of the various laser radars and is fused with the FPN at multiple scales. Planarization mapping is performed on the point cloud encoded features in the BEV viewing angle 3D feature space $R^{C_L^1 \times Z \times X \times Y}$ by using a column pooling operation, to obtain a BEV planar point cloud encoded feature $F_{BEV}^L \in R^{C_L^2 \times Z \times X}$. In combination with the external reference $R_i^L, T_i^L (j = 1, 2, ..., M)$, of the relative body coordinate system of the various laser radars, the coordinates of the point cloud data $L_j (j = 1, 2, ..., M)$ are transformed to uniform BEV viewing angle 3D gridding features $R^{C_L^1 \times Z \times X \times Y}$ taking the coordinate system of the current vehicle as a center. The image gridding feature and the point cloud gridding feature are fused to obtain a vision and laser radar fused BEV feature $F_{BEV} \in R^{C \times Z \times X}$.

The column pooling operation manner for the 3D feature spaces $R^{C_I^1 \times Z \times X \times Y}$ and $R^{C_L^1 \times Z \times X \times Y}$ can consider a sum-average or a dimension stacking of all voxel feature vectors of columns corresponding to various grids in a height direction of the Z axis on a plane of the BEV space XY. If it is the sum-average, new feature dimensions are $C_I^2 = C_I^1$ and $C_L^2 = C_L^1$. If it is the dimension stacking, new feature dimensions are $C_I^2 = C_I^1 \times Y$ and

$$C_L^2 = C_L^1 \times Y$$

In step 302: the image gridding feature and the point cloud gridding feature are input to a first-stage processing module of a network transformer to obtain a fused point cloud feature.

In FIG. 2-1, the image gridding feature $F_i^I$ is used as an input of a self-attention mechanism layer, that is, the image gridding feature $F_i^L$ is used as a key-value map K, a value map V, and a query graph Q of the self-attention mechanism layer. A first query graph Q1 is obtained through the self-attention mechanism layer and a residual connection. The point cloud gridding feature is used as a first key-value map and a first value map of an attention mechanism, and the first key-value map, the first value map, and the first query graph Q1 are processed through the self-attention mechanism layer and the residual connection to obtain a second query graph Q2. The second query graph, the first key-value map, and the first value map are processed through the self-attention mechanism layer, the residual connection, and a feedforward network to obtain a fused point cloud feature. That is, the second query graph, the first key-value map, and the first value map are used as inputs of the self-attention mechanism layer; and the second query graph, the first key-value map, and the first value map are processed through the self-attention mechanism layer, the residual connection, and the feedforward network to obtain the fused point cloud feature.

In step 303: the image gridding feature and the fused point cloud feature are input to a second-stage processing module of the network transformer to obtain a fused image feature, where the first-stage processing module and the second-stage processing module have the same structures.

In FIG. 2-2, the point cloud gridding feature $F_i^L$ is used as an input of a self-attention mechanism layer, that is, the point cloud gridding feature is used as a key-value map K, a value map V, and a query graph Q of the self-attention mechanism layer. A third query graph Q3 is obtained through the self-attention mechanism layer and a residual connection. The image gridding feature is used as a second key-value map and a second value map of an attention mechanism, and the second key-value map, the second value map, and the third query graph are processed through the self-attention mechanism layer and the residual connection to obtain a fourth query graph Q4. The fourth query graph, the second key-value map, and the second value map are processed through the self-attention mechanism layer, the residual connection, and a feedforward network to obtain a fused image feature. That is, the fourth query graph, the second key-value map, and the second value map are used as inputs of the self-attention mechanism layer; and the fourth query graph, the second key-value map, and the second value map are processed through the self-attention mechanism layer, the residual connection, and the feedforward network to obtain the fused image feature.

The image gridding feature $F_{BEV}^I$ and the point cloud gridding feature $F_{BEV}^L$ are fused by multiple iterations and interactions using the network transformer. The network transformer is set to be $F_{BEV}^{out} = \text{Transformer}(F_{BEV}^q, F_{BEV}^{qkv})$, which means that there are two stages in each iteration. The first-stage processing module, namely, I2L module, is expressed by $F_{BEV}^q$. The second-stage processing module, namely, L2I module, is expressed by $F_{BEV}^{qkv}$. The I2L module fuses the BEV feature map of the image gridding feature with information of the BEV feature map of the point cloud gridding feature to obtain the fused point cloud feature $F'_{BEV}^L : \text{Transformer}(F_{BEV}^I, F_{BEV}^L)$, and the L2I module fuses the BEV of the image gridding feature with the BEV of the point cloud gridding feature to obtain the fused image feature $F'_{BEV}^I = \text{Transformer}(F'_{BEV}^L, F_{BEV}^I)$.

In the I2L module, in the network transformer $F_{BEV}^{out} = \text{Transformer}\left(F_{BEV}^q, F_{BEV}^{qkv}\right)$, firstly, the image gridding feature is used as a query value and a key value. A query $Q_1$ is generated through the self-attention mechanism layer and the residual connection. That is, in the I2L module, the query $Q_1$ is generated by the image BEV feature; and in the I2L module, the query graph $Q_2$ is a query initialized by the image BEV feature and is obtained by performing querying and residual connection on the BEV feature map of the laser radar via the self-attention layer. In the L2I module, the query graph $Q_3$ is generated by the BEV of the fused point cloud feature of the laser radar. Then, $Q_3$ is used as the query graph, and the image gridding feature is used as a key value. A fused query graph $Q_4$ is obtained by a cross attention mechanism layer and residual connection. In I2L module, the fused query may be achieved by taking the BEV of the image as the first key value and the first key map to obtain the fused point cloud BEV feature map $F_{BEV}^{out}$. In L2I module, the query graph $Q_3$ is a query initialized by the BEV feature map of the laser radar and is obtained by performing querying and residual connection on the BEV feature map of the image via the self-attention layer. Finally, $Q_3$ generated by fusing the BEV feature of the image with the BEV feature of the laser radar is used as the query graph. The image gridding feature is used as the second key-value map and the second key map. The BEV feature map $F_{BEV}^{out}$ of the fused image is obtained through the cross attention layer, the residual connection, and the feedforward network (FFN). In the L2I module, the fused query may take the BEV of the laser radar as the key value for querying to obtain the BEV feature map $F_{BEV}^{out}$ of the fused image.

In step 304: the fused image feature and the fused point cloud feature are iterated by using the first-stage processing module and the second-stage processing module to obtain a fused feature.

In specific applications, the fused image feature is used as an input of the first-stage processing module, and a fifth query graph is obtained through a self-attention mechanism layer and a residual connection; the fused point cloud feature is used as a fifth key-value map and a fifth value map of the first-stage module, and the fifth key-value map, the fifth value map, and the fifth query graph are processed through the self-attention mechanism layer and the residual connection to obtain a sixth query graph; and the sixth query graph, the fifth key-value map, and the fifth value map are processed through the self-attention mechanism layer, the residual connection, and a feedforward network to obtain the fused point cloud feature.

The fused point cloud feature is used as an input of the second-stage processing module, and a seventh query graph is obtained through a self-attention mechanism layer and a residual connection; the fused image feature is used as a sixth key-value map and a sixth value map of the second-stage module, and the sixth key-value map, the sixth value map, and the seventh query graph are processed through the self-attention mechanism layer and the residual connection to obtain an eighth query graph; and the eighth query graph, the sixth key-value map, and the sixth value map are processed through the self-attention mechanism layer, the residual connection, and a feedforward network to obtain the fused feature.

It should be noted that this embodiment takes two iterations as an example, which indicates that the process of obtaining the fused feature can include multiple iterations in the practical applications. The specific operation process is consistent with the above process, but only the numbers of iterations are different.

In step 305: the fused feature is input to a pre-constructed target detection network to achieve target detection.

The target detection network includes, but is not limited to: a 3D target detection decoder and a road structure segmentation decoder. When the fused image feature is input to the 3D target detection decoder, a target obstacle is detected. When the fused image feature is input to the road structure segmentation decoder, lane lines of a vehicle are detected.

In practical applications, the fused image feature obtained by the network transformer is connected to a well-matched task network such as a 3D target detection DtHead and a road structure segmentation decoder RdHead to output corresponding results of target detection, passable regions on a road, and a lane line segmentation task.

The 3D target detection *DtHead* can select any one of an anchor-point-based PointPillars, a central heat map prediction-based CenterPoint, a Transformer-based DETR3D, a Transfusion, and another detection head. The road structure segmentation decoder *RdHead* adopts a multilayer convolutional network.

In this embodiment, the network transformer is used to fuse features of two different modalities: point cloud data and images. Through multiple iterations, information of the two modalities is fused to better fuse the images with the point cloud data at different scales, thereby improving the accuracy of target detection. Meanwhile, the present disclosure does not rely highly on the input quality of a laser radar and has better robustness. Furthermore, the image and point cloud data-based fusion provided by the present disclosure can fully utilize complementary advantages between the point cloud and the images to effectively and accurately detect a target.

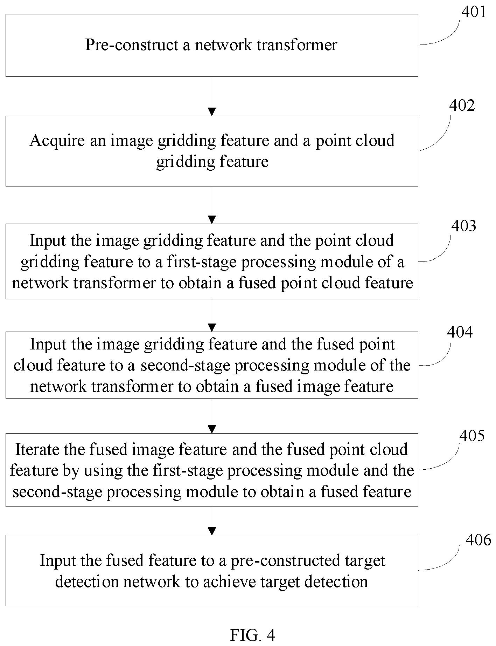

Referring to FIG. 4, it is a flowchart of a method for fusing an image with a point cloud according to the present disclosure. The method includes:

In step 401: a network transformer is pre-constructed.

A network transformer is pre-constructed, which includes: a training sample library is acquired, where the training sample library includes image data, point cloud data, and road information; the image data, the point cloud data, and the road information are processed through a multi-task loss function to obtain an optimal network weight of training samples; and the network transformer is trained according to the optimal network weight to obtain the pre-constructed network transformer, where the multi-task loss function is formed by weighting a target detection loss and a road structure segmentation loss. In specific training for the network transformer, 2D images of the vehicle-mounted cameras at the various viewing angles and 3D point cloud data of the laser radar corresponding to various time stamps t need to be acquired. In a 3D space, desired 3D target types and corresponding surrounding box information are annotated. High-accuracy map data covering a vehicle driving region is used to annotate, on a layer, structural information such as passable regions of a road and lane lines. Meanwhile, pose information of the vehicle at the various time stamps is saved, and the network transformer training sample library is generated. The image data, the point cloud data, and the road information are processed through the multi-task loss function to obtain the optimal network weight of the training samples. The network transformer is trained according to the optimal network weight to obtain the pre-constructed network transformer.

The loss function $L$ is formed by weighting the 3D target detection loss $L_{det}$ and the road structure segmentation loss $L_{seg}$, that is, $L = L_{det} + \gamma \cdot L_{seg}$, where the 3D target detection loss $L_{det}$ is obtained by weighting and calculating a classified Focal loss $L_{cls}$, a 3D box regression L1 loss $L_{reg}$, and a central heat map regression L1 loss $L_{heatmap}$; and the road structure segmentation loss $L_{seg}$ is obtained by weighting and calculating a binary cross entropy $L_{road}$ of the passable regions of the road and a binary cross entropy loss $L_{lane}$ of the lane lines.

Further, timestamp alignment also needs to be performed on the 2D vision images of the cameras at the various viewing angles and the 3D point cloud data of the laser radar. The latest timestamp can be usually used as the same group of data corresponding to the various sensors. The pose information of the vehicle at the various timestamps can be used for necessary motion compensation.

In step 402: An image gridding feature and a point cloud gridding feature are acquired.

In step 403: the image gridding feature and the point cloud gridding feature are input to a first-stage processing module of a network transformer to obtain a fused point cloud feature.

In step 404: the image gridding feature and the fused point cloud feature are input to a second-stage processing module of the network transformer to obtain a fused image feature, where the first-stage processing module and the second-stage processing module have the same structures.

In step 405: the fused image feature and the fused point cloud feature are iterated by using the first-stage processing module and the second-stage processing module to obtain a fused feature.

In step 406: the fused feature is input to a pre-constructed target detection network to achieve target detection.

In this embodiment, the network transformer is used to fuse features of two different modalities: point cloud data and images. Through multiple iterations, information of the two modalities is fused to better fuse the images with the point cloud data at different scales, thereby improving the accuracy of target detection. Meanwhile, the present disclosure does not rely highly on the input quality of a laser radar and has better robustness.

It should be noted that the drawings provided in the following embodiments only schematically explain the basic concept of the present disclosure. The drawings only show components related to the present disclosure and are not drawn based on the quantities, shapes, and sizes of the components during actual implementation. The forms, quantities, and proportions of the components during actual implementation can be arbitrarily changed, and the layout of the components may also be more complex.

It should be noted that for the aforementioned method embodiment, for the sake of simplicity, they are all described as a series of action combinations. However, those skilled in the art should be aware that the present application is not limited by the order of the described actions, as according to the present application, certain steps can be performed in other orders or simultaneously. Secondly, those skilled in the art should also be aware that the embodiments described in this specification are all preferred embodiments, and the actions involved may not be necessary for the present application.

Based on the explanations of the foregoing method embodiment, the present disclosure further provides a corresponding apparatus embodiment to implement the content of the foregoing method embodiment.

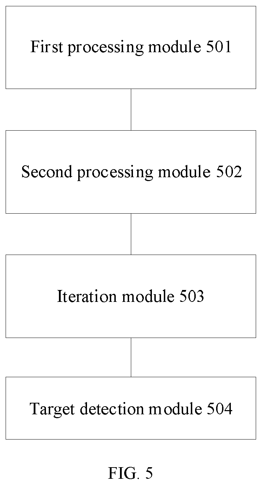

Referring to FIG. 5, it is a schematic structural diagram of an apparatus for fusing an image with a point cloud according to an embodiment of the present disclosure. The apparatus includes:

a first processing module 501, configured to input an image gridding feature and a point cloud gridding feature to a first-stage processing module of a network transformer to obtain a fused point cloud feature;

a second processing module 502, configured to input the image gridding feature and the fused point cloud feature to a second-stage processing module of the network transformer to obtain a fused image feature, where the first-stage processing module and the second-stage processing module have the same structures;

an iteration module 503, configured to iterate the fused image feature and the fused point cloud feature by using the first-stage processing module and the second-stage processing module to obtain a fused feature; and

a target detection module 504, configured to input the fused image feature to a pre-constructed target detection network to achieve target detection.

Further, the first processing module includes:

a first query graph unit, configured to: use the image gridding feature as an input of a self-attention mechanism layer, and obtain a first query graph through the self-attention mechanism layer and a residual connection;

a second query graph unit, configured to: use the point cloud gridding feature as a first key-value map and a first value map of the self-attention mechanism layer, and process the first key-value map, the first value map, and the first query graph through the self-attention mechanism layer and the residual connection to obtain a second query graph; and

a first fusion unit, configured to process the second query graph, the first key-value map, and the first value map through the self-attention mechanism layer, the residual connection, and a feedforward network to obtain the fused point cloud feature.

Further, the second processing module includes:

a third query graph unit, configured to: use the point cloud gridding feature as an input of a self-attention mechanism layer, and obtain a third query graph through the self-attention mechanism layer and a residual connection;

a fourth query graph unit, configured to: use the image gridding feature as a second key-value map and a second value map of the self-attention mechanism layer, and process the second key-value map, the second value map, and the third query graph through the self-attention mechanism layer and the residual connection to obtain a fourth query graph; and

a second fusion unit, configured to process the fourth query graph, the second key-value map, and the second value map through the self-attention mechanism layer, the residual connection, and a feedforward network to obtain the fused image feature.

Further, the apparatus further includes:

an image module, configured to acquire images of cameras at various viewing angles;

an image encoding module, configured to perform feature encoding on the images by using a convolutional network;

a transformation module, configured to transform the image encoded feature into an image three-dimensional voxel feature;

an image gridding module, configured to transform the image three-dimensional voxel feature into the image gridding feature through coordinate transformation.

Further, the apparatus further includes:

a point cloud module, configured to acquire point cloud data of a vehicle-mounted laser radar;

a point cloud encoding module, configured to perform feature encoding on the point cloud data by using a second convolutional neural network to obtain a point cloud encoded feature; and

a point cloud gridding module, configured to transform the point cloud encoded feature into the point cloud gridding feature.

Further, the apparatus includes a construction module, configured to pre-construct the network transformer; the construction module includes:

a sample library unit, configured to acquire a training sample library, where the training sample library includes image data, point cloud data, and road information; and

a construction unit, configured to: process the image data, the point cloud data, and the road information through a multi-task loss function to obtain an optimal network weight of training samples, and train the network transformer according to the optimal network weight to obtain the pre-constructed network transformer, where the multi-task loss function is formed by weighting a target detection loss and a road structure segmentation loss.

In this embodiment, the network transformer is used to fuse features of two different modalities: point cloud data and images. Through multiple iterations, information of the two modalities is fused to better fuse the images with the point cloud data at different scales, thereby improving the accuracy of target detection. Meanwhile, the present disclosure does not rely highly on the input quality of a laser radar and has better robustness.

Since the above apparatus embodiment is basically similar to the method embodiment, its descriptions are relatively simple, and related parts refer to some of the explanations of the method embodiment.

It is easy for those skilled in the art to think that any combination of the above various embodiments is feasible, so any combination between the above various embodiments is an implementation of the present disclosure. However, due to a space limitation, this specification will not be elaborated one by one here.

Although the preferred embodiments of the present disclosure have been described, those skilled in the art may make additional changes and modifications to these embodiments once they have knowledge of the basic creative concept. Therefore, the attached claims are intended to be interpreted as including the preferred embodiments and all changes and modifications falling within the scope of the present disclosure. The above embodiments are only the preferred embodiments provided to fully illustrate the present disclosure, and the protection scope of the present disclosure is not limited thereto. Any equivalent substitutions or transformations made by those skilled in the art on the basis of the present disclosure shall fall within the protection scope of the present disclosure.

**Claims**

1. A method for fusing an image with a point cloud, comprising:

   inputting an image gridding feature and a point cloud gridding feature to a first-stage processing module of a network transformer to obtain a fused point cloud feature;
   inputting the image gridding feature and the fused point cloud feature to a second-stage processing module of the network transformer to obtain a fused image feature, wherein the first-stage processing module and the second-stage processing module have the same structures;
   iterating the fused image feature and the fused point cloud feature by using the first-stage processing module and the second-stage processing module to obtain a fused feature; and
   inputting the fused feature to a pre-constructed target detection network to achieve target detection.

2. The method according to claim 1, wherein the inputting an image gridding feature and a point cloud gridding feature to a first-stage processing module of a network transformer to obtain a fused point cloud feature comprises:

   using the image gridding feature as an input of a self-attention mechanism layer, and obtaining a first query graph through the self-attention mechanism layer and a residual connection;
   using the point cloud gridding feature as a first key-value map and a first value map of the self-attention mechanism layer, and processing the first key-value map, the first value map, and the first query graph through the self-attention mechanism layer and the residual connection to obtain a second query graph; and
   processing the second query graph, the first key-value map, and the first value map through the self-attention mechanism layer, the residual connection, and a feedforward network to obtain the fused point cloud feature.

3. The method according to claim 1, wherein the inputting the image gridding feature and the point cloud feature to a second-stage processing module of the network transformer to obtain a fused image feature comprises:

   using the point cloud gridding feature as an input of a self-attention mechanism layer, and obtaining a third query graph through the self-attention mechanism layer and a residual connection;
   using the image gridding feature as a second key-value map and a second value map of the self-attention mechanism layer, and processing the second key-value map, the second value map, and the third query graph through the self-attention mechanism layer and the residual connection to obtain a fourth query graph; and
   processing the fourth query graph, the second key-value map, and the second value map through the self-attention mechanism layer, the residual connection, and a feedforward network to obtain the fused image feature.

4. The method according to claim 1, wherein before the inputting an image gridding feature and a point cloud gridding feature to a first-stage processing module of a network transformer to obtain a fused point cloud feature, the method further comprises:

   acquiring images of cameras at various viewing angles;

performing feature encoding on the images by using a first convolutional network to obtain an image encoded feature;

transforming the image encoded feature into an image three-dimensional voxel feature; and

transforming the image three-dimensional voxel feature into the image gridding feature through coordinate transformation.

5. The method according to claim 1, wherein before the inputting an image gridding feature and a point cloud gridding feature to a first-stage processing module of a network transformer to obtain a fused point cloud feature, the method further comprises:

acquiring point cloud data of a vehicle-mounted laser radar;

performing feature encoding on the point cloud data by using a second convolutional neural network to obtain a point cloud encoded feature; and

transforming the point cloud encoded feature into the point cloud gridding feature.

6. The method according to any one of claims 1 to 5, wherein the method further comprises: pre-constructing the network transformer;

the pre-constructing the network transformer comprises:

acquiring a training sample library, wherein the training sample library comprises image data, point cloud data, and road information;

processing the image data, the point cloud data, and the road information through a multi-task loss function to obtain an optimal network weight of training samples; and

training the network transformer according to the optimal network weight to obtain the pre-constructed network transformer, wherein the multi-task loss function is formed by weighting a target detection loss and a road structure segmentation loss.

7. An apparatus for fusing an image with a point cloud, comprising:

a first processing module, configured to input an image gridding feature and a point cloud gridding feature to a first-stage processing module of a network transformer to obtain a fused point cloud feature;

a second processing module, configured to input the image gridding feature and the fused point cloud feature to a second-stage processing module of the network transformer to obtain a fused image feature, wherein the first-stage processing module and the second-stage processing module have the same structures;

an iteration module, configured to iterate the fused image feature and the fused point cloud feature by using the first-stage processing module and the second-stage processing module to obtain a fused feature; and

a target detection module, configured to input the fused feature to a pre-constructed target detection network to achieve target detection.

8. The apparatus according to claim 7, wherein the first processing module comprises:

a first query graph unit, configured to: use the image gridding feature as an input of a self-attention mechanism layer, and obtain a first query graph through the self-attention mechanism layer and a residual connection;

a second query graph unit, configured to: use the point cloud gridding feature as a first key-value map and a first value map of the self-attention mechanism layer, and process the first key-value map, the first value map, and the first query graph through the self-attention mechanism layer and the residual connection to obtain a second query graph; and

a first fusion unit, configured to process the second query graph, the first key-value map, and the first value map through the self-attention mechanism layer, the residual connection, and a feedforward network to obtain the fused point cloud feature.

9. The apparatus according to claim 7, wherein the second processing module comprises:

a third query graph unit, configured to: use the point cloud gridding feature as an input of a self-attention mechanism layer, and obtain a third query graph through the self-attention mechanism layer and a residual connection;

a fourth query graph unit, configured to: use the image gridding feature as a second key-value map and a second value map of the self-attention mechanism layer, and process the second key-value map, the second value map, and the third query graph through the self-attention mechanism layer and the residual connection to obtain a fourth query graph; and

a second fusion unit, configured to process the fourth query graph, the second key-value map, and the second value map through the self-attention mechanism layer, the residual connection, and a feedforward network to obtain the fused image feature.

10. The apparatus according to claim 7, wherein the apparatus further comprises:

an image module, configured to acquire images of cameras at various viewing angles;

an image encoding module, configured to perform feature encoding on the images by using a first convolutional network to obtain an image encoded feature;

a transformation module, configured to transform the image encoded feature into an image three-dimensional voxel feature; and

an image gridding module, configured to transform the image three-dimensional voxel feature into the image gridding feature through coordinate transformation.

11. The apparatus according to claim 7, wherein the apparatus further comprises:

a point cloud module, configured to acquire point cloud data of a vehicle-mounted laser radar;

a point cloud encoding module, configured to perform feature encoding on the point cloud data by using a second convolutional neural network to obtain a point cloud encoded feature; and

a point cloud gridding module, configured to transform the point cloud encoded feature into the point cloud gridding feature.

12. The apparatus according to any one of claims 7 to 11, wherein the apparatus further comprises a construction module, configured to pre-construct the network transformer;

the construction module comprises:

a sample library unit, configured to acquire a training sample library, wherein the training sample library comprises image data, point cloud data, and road information; and

a construction unit, configured to: process the image data, the point cloud data, and the road information through a multi-task loss function to obtain an optimal network weight of training samples, and train the network transformer according to the optimal network weight to obtain the pre-constructed network transformer, wherein the multi-task loss function is formed by weighting a target detection loss and a road structure segmentation loss.

Images of multiple cameras

Image features of multiple cameras

BEV features of images

Point cloud of laser radar

BEV features of laser radars

Laser radar-camera fused
BEV sensing result

FIG. 1

BEV features of
multiple cameras

BEV features of
laser radars

Fused BEV feature

FIG. 2

FIG. 2-1

FIG. 2-2

Acquire an image gridding feature and a point cloud gridding feature ⟋301

Input the image gridding feature and the point cloud gridding feature to a first-stage processing module of a network transformer to obtain a fused point cloud feature ⟋302

Input the image gridding feature and the fused point cloud feature to a second-stage processing module of the network transformer to obtain a fused image feature ⟋303

Iterate the fused image feature and the fused point cloud feature by using the first-stage processing module and the second-stage processing module to obtain a fused feature ⟋304

Input the fused feature to a pre-constructed target detection network to achieve target detection ⟋305

FIG. 3

```
┌─────────────────────────────────────────────────────┐
│                                                       │  401
│         Pre-construct a network transformer           │
│                                                       │
└─────────────────────────────────────────────────────┘
                          │
                          ▼
┌─────────────────────────────────────────────────────┐
│                                                       │  402
│   Acquire an image gridding feature and a point cloud │
│                   gridding feature                    │
└─────────────────────────────────────────────────────┘
                          │
                          ▼
┌─────────────────────────────────────────────────────┐
│   Input the image gridding feature and the point cloud│  403
│   gridding feature to a first-stage processing module │
│   of a network transformer to obtain a fused point    │
│                     cloud feature                     │
└─────────────────────────────────────────────────────┘
                          │
                          ▼
┌─────────────────────────────────────────────────────┐
│     Input the image gridding feature and the fused    │  404
│  point cloud feature to a second-stage processing     │
│  module of the network transformer to obtain a fused  │
│                     image feature                     │
└─────────────────────────────────────────────────────┘
                          │
                          ▼
┌─────────────────────────────────────────────────────┐
│  Iterate the fused image feature and the fused point  │  405
│  cloud feature by using the first-stage processing    │
│  module and the second-stage processing module to     │
│                  obtain a fused feature               │
└─────────────────────────────────────────────────────┘
                          │
                          ▼
┌─────────────────────────────────────────────────────┐
│   Input the fused feature to a pre-constructed target │  406
│   detection network to achieve target detection       │
└─────────────────────────────────────────────────────┘
```

FIG. 4

First processing module 501

Second processing module 502

Iteration module 503

Target detection module 504

FIG. 5

Europäisches
Patentamt

European
Patent Office

Office européen
des brevets

# EUROPEAN SEARCH REPORT

Application Number

EP 23 21 3310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 115 512 132 A (UNIV JILIN) 23 December 2022 (2022-12-23) * paragraphs [0011], [0013] - [0015], [0017] * | 1-12 | INV. G06F18/25 G01S17/86 G06V10/80 G06V20/56 G06V20/64 |
| Y | IYER GANESH ET AL: "CalibNet: Geometrically Supervised Extrinsic Calibration using 3D Spatial Transformer Networks", 2018 IEEE/RSJ INTERNATIONAL CONFERENCE ON INTELLIGENT ROBOTS AND SYSTEMS (IROS), IEEE, 1 October 2018 (2018-10-01), pages 1110-1117, XP033490983, DOI: 10.1109/IROS.2018.8593693 [retrieved on 2018-12-27] * section III.C * | 1-12 | |
| Y | BAI XUYANG ET AL: "TransFusion: Robust LiDAR-Camera Fusion for 3D Object Detection with Transformers", 2022 IEEE/CVF CONFERENCE ON COMPUTER VISION AND PATTERN RECOGNITION (CVPR), IEEE, 18 June 2022 (2022-06-18), pages 1080-1089, XP034193208, DOI: 10.1109/CVPR52688.2022.00116 [retrieved on 2022-09-27] * section 3; figure 2 * | 1-12 | |

TECHNICAL FIELDS
SEARCHED      (IPC)

G06V
G06F
G01S

-/--

The present search report has been drawn up for all claims

| Place of search | Date of completion of the search | Examiner |
|---|---|---|
| The Hague | 22 April 2024 | Mukasa, Oliver |

EPO FORM 1503 03.82 (P04C01)

European Patent Office
Office européen
des brevets

## EUROPEAN SEARCH REPORT

Application Number

EP 23 21 3310

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUNGSEOK KIM: "CRAFT: Camera-Radar 3D Object Detection with Spatio-Contextual Fusion Transformer", PROCEEDINGS OF THE AAAI CONFERENCE ON ARTIFICIAL INTELLIGENCE, vol. 37, no. 1, 25 November 2022 (2022-11-25), pages 1160-1168, XP093152643, ISSN: 2159-5399, DOI: 10.1609/aaai.v37i1.25198 * the whole document * | 1-12 | |

TECHNICAL FIELDS
SEARCHED (IPC)

The present search report has been drawn up for all claims

| Place of search | Date of completion of the search | Examiner |
|---|---|---|
| The Hague | 22 April 2024 | Mukasa, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 21 3310**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-04-2024**

| Patent document cited in search report | Publication date | Patent family member(s) | Publication date |
|---|---|---|---|
| CN 115512132 A | 23-12-2022 | NONE | |

For more details about this annex : see Official Journal of the European Patent Office, No. 12/82

EPO FORM P0459